# EUROPÄISCHE PATENTANMELDUNG

(11) **EP 2 196 696 A2**
(43) Veröffentlichungstag der Anmeldung: **16.06.2010**
(21) Anmeldenummer: 09178264.9
(22) Anmeldetag: 08.12.2009
(51) Int. Cl.: F16F 9/348

(54) **Schwingungsdämpfer**

(30) Priorität: 15.12.2008 DE 102008054643
(71) Anmelder: ZF Friedrichshafen AG, 88038 Friedrichshafen (DE)
(72) Erfinder: Heyn, Steffen, 97464, Niederwerrn (DE); Sundermann, Karin, 97526, Sennfeld (DE)

(57) **Zusammenfassung**

Dämpfventileinrichtung (1), umfassend einen Ventilkörper (3) mit mindestens einem Durchtrittskanal (5a,5b,5c) der mit einem Ventilelement (15) ein Dämpfventil bildet, wobei das Ventilelement von einer Ventilfeder (17) in einem Steuerdruckraum (21) in einer definierten Betriebsstellung gehalten wird und bei einer Anströmung vom Durchtrittskanal (5a,5b) in eine Öffnungsbewegung überführt wird, wobei das Ventilelement eine erste druckbeaufschlagte Fläche (23), die bei Druckbeaufschlagung ausgehend von dem mindestens einen Durchtrittskanal eine Öffnungskraft und eine zweite druckbeaufschlagte Fläche (25) am Ventilelement aufweist, die bei Druckbeaufschlagung im Steuerdruckraum eine Schließkraft auf das Ventilelement ausübt, wobei das Ventilelement oberhalb eines definierten Druckniveaus in eine Schließposition bewegt wird, wobei zwischen dem Durchtrittskanal und dem Steuerdruckraum mindestens eine Strömungsverbindung (27,29) vorliegt und die zweite druckbeaufschlagte Fläche am Ventilelement größer ist als die erste druckbeaufschlagte Fläche und die Strömungsverbindung mindestens zwei Strompfade (27,29) aufweist, wobei mindestens ein Strompfad (27) einen Volumenstrom in Abflussrichtung aus dem Steuerdruckraum ermöglicht und ein Strompfad (29) mit einer Rückschlagventileinrichtung (31) ausgeführt ist, die bei einer Anströmung ausgehend vom Steuerdruckraum (21) eine Schließstellung einnimmt.

## Beschreibung

Die Erfindung betrifft einen Schwingungsdämpfer gemäß dem Oberbegriff von Patentanspruch 1.

Bei der Auslegung eines unverstellbaren Schwingungsdämpfers besteht grundsätzlich das Problem, einen guten Kompromiss zwischen Komfort und Fahrsicherheit zu finden. Mit der Entwicklung verstellbarer Schwingungsdämpfer ist der Widerspruch zu einem großen Teil entschärft worden, doch lässt sich auf Grund von Preisvorgaben nicht jedes Fahrzeug mit verstellbaren Schwingungsdämpfern bestücken.

Die DE 41 36 261 A1 beschreibt ein Verfahren und eine Vorrichtung zur betriebsmäßigen Beeinflussung einer Dämpfungsbaugruppe. Dabei ist u. a. vorgesehen, dass eine härtere Dämpfkraftcharakteristik beibehalten wird, auch wenn keine Anregung zur Schwingbewegung mehr vorliegt. Diese Rückschaltverzögerung auf eine weichere Dämpfkraftkennlinie bewirkt ein deutlich schnelles Abklingen der Schwingbewegung.

Die EP 1 538 367 B1 beschreibt eine Dämpfventileinrichtung mit einer progressiven Dämpfkraftkennlinie. In einem definierten Dämpfkraftbereich wird die Dämpfkraft von einem an sich bekannten Scheibenventil bestimmt, wodurch ein komfortables Fahrverhalten erreicht wird. Bei sehr großen Kolbenstangengeschwindigkeiten schließt ein in Reihe zum Scheibenventil angeordneter Schieber. Es stellt sich eine sehr große Dämpfkraft ein, die ggf. durch ein sich öffnendes Druckbegrenzungsventil, das dem Schieber hydraulisch parallel geschaltet ist, begrenzt wird. Sobald eine die den Schieber in die Schließstellung bewegende Mindestkolbenstangengeschwindigkeit unterschritten wird, geht der Schieber wieder in eine Durchlassöffnung, so dass nur noch das Scheibenventil eine Dämpfkraft erzeugt.

In diesem Zusammenhang ist die JP 7-1671 91 zu nennen, die ebenfalls eine zweistufige Dämpfventileinrichtung betrifft. Neben dem Scheibenventil kommt ein Drosselring zur Anwendung, der im Zufluss zum Scheibenventil angeordnet ist. Der Drosselring wird von einer Rückstellfeder in Durchlass-Stellung gehalten. Übersteigt die Kolbenstangenbewegung eine definierte Geschwindigkeit, dann nimmt der Drosselring aufgrund der wirksamen Staudruckkräfte eine Drosselstellung ein. Der Drosselring ist innerhalb einer Ringnut axial beweglich, wobei die Vorderseite und die Rückseite des Drosselrings exakt gleich groß sind. Im Drosselring sind mehrere Drosselöffnungen ausgeführt, so dass der Drosselring bei statischer Druckbelastung hinsichtlich der hydraulischen Druckkräfte ausgeglichen ist.

Fällt der dynamische Druck am Drosselring ab, dann bewegt die Rückstellfeder den Drosselring wieder in die Durchlass-Stellung.

Mit den beiden Dämpfventileinrichtungen kann keine Rückschaltverzögerung wie mit der verstellbaren Dämpfungsbaugruppe erreicht werden.

Die Aufgabe der vorliegenden Erfindung besteht darin, eine Dämpfventileinrichtung zu schaffen, bei der allein durch die Ausnutzung der Druckverhältnisse im Schwingungsdämpfer eine fremdenergiefreie Rückschaltverzögerung erreicht wird.

Erfindungsgemäß wird die Aufgabe dadurch gelöst, dass die zweite druckbeaufschlagte Fläche am Ventilelement größer ist als die erste druckbeaufschlagte Fläche und die Strömungsverbindung mindestens zwei Strompfade aufweist, wobei mindestens ein Strompfad einen Volumenstrom in Abflussrichtung aus dem Steuerdruckraum ermöglicht und ein Strompfad mit einer Rückschlagventileinrichtung ausgeführt ist, die bei einer Anströmung ausgehend vom Steuerdruckraum eine Schließstellung einnimmt.

Die Schließbewegung des Ventilelements setzt bei einem definierten Druckniveau im Steuerdruckraum ein und verläuft zumindest nahezu ungedrosselt. Die Öffnungsbewegung dagegen verläuft verzögert, da der Strompfad durch die Rückschlagventileinrichtung blockiert wird und damit die Anzahl der offenen Strompfade im Vergleich zum Zustand während einer Schließbewegung des Ventilelements kleiner ist. Der offene Strompfad wirkt als Drossel. Folglich kann eine verzögerte Öffnungsbewegung allein durch die vorteilhafte geometrische Ausgestaltung der Dämpfventileinrichtung erreicht werden, ohne dass es einer aktiven Verstelleinrichtung bedarf.

Im Hinblick auf eine kompakte Bauform ist die Strömungsverbindung innerhalb des Ventilelements ausgeführt.

Des Weiteren ist vorgesehen, dass der Steuerdruckraum von einer Ringstegscheibe gebildet wird. Die Ringstegscheibe kann zwei konzentrische Ringstege aufweisen, die den Steuerdruckraum radial begrenzen.

Bei einer ersten Ausführungsform ist in Strömungsrichtung in Reihe zum Ventilelement ein zweites Ventilelement angeordnet, das ein zweites Dämpfventil bildet. Die Verwendung zweier Ventilelemente ermöglicht Dämpfkraftkennlinien mit mindestens zwei Wendepunkten, so dass man einen Komfortbereich von einem Abklingbereich trennen kann.

Der Ventilkörper für das erste Ventilelement weist eine erste Ventilsitzfläche auf, die einen Ringkanal zum zweiten Ventilelement begrenzt. Man erreicht eine radial kompakte Bauform und eine sehr große Anströmfläche am zweiten Ventilelement.

In weiterer vorteilhafter Ausgestaltung ist das zweite Ventilelement radial außerhalb der ersten druckbeaufschlagten Fläche des ersten Ventilelements angeordnet ist und kommt ab einem definierten Abhubweg am ersten Ventilelement zur Anlage, wobei die wirksame druckbeaufschlagte Fläche von der Summe der ersten druckbeaufschlagten Fläche am ersten Ventilelement und von einer druckbeaufschlagten des zweiten Ventilelements bestimmt wird, wobei die Summe der beiden druckbeaufschlagten Fläche mindestens so groß ist wie die zweite druckbeaufschlagte Fläche des ersten Ventilelements. Wenn das zweite Ventilelement den definierten Abhubweg überschreitet, dann wirkt eine größere Abhubkraft auf das erste Ventilelement und fördert dessen Abhubbewegung.

Gemäß einem vorteilhaften Unteranspruch ist das zweite Ventilelement als ein Ventilring ausgeführt.

Der Ventilring kann sich an einem außerhalb des Steuerdruckraums verlaufenden Stegs des ersten Ventilelements zentrieren.

Ein Ringsteg der Ringstegscheibe stellt eine Abhubbegrenzung für das zweite Ventilelement dar.

Eine Ventilschließfeder für das zweite Ventilelement stützt sich an der Ringstegscheibe ab, die damit zusätzlich die Funktion eines Federtellers übernimmt.

Bei einer Alternativvariante wird das erste Ventilelement über einen ersten Durchtrittskanal und das zweite Ventilelement über einen zweiten Durchtrittskanal mit Dämpfmedium angeströmt, wobei der erste und der zweite Durchtrittskanal parallel geschaltet sind.

Diese Lösung bietet den Vorteil, dass die beiden Ventilelemente praktisch keine gegenseitigen geometrischen Abhängigkeiten aufweisen, die bei der Auslegung oder Anpassung an eine gewünschte Dämpfkraftkennlinie zu berücksichtigen sind.

Die Ringstegsscheibe trennt den ersten und den zweiten Durchtrittskanal im Bereich der Austrittsöffnungen voneinander. Der Vorteil dieser Maßnahme besteht darin, dass sich die Oberflächenkontur am Ventilkörper im Bereich der Austrittsöffnungen der Durchtrittskanäle sehr einfach gestaltet.

Die Ventilfeder für das erste Ventilelement stützt sich auf einer Trägerscheibe ab, die räumlich zwischen dem Ventilelement und der Ringstegscheibe angeordnet ist. Mit der Trägerscheibe können verschiedene Ebenen im Bereich der Oberfläche des Ventilkörpers bereitgestellt werden, so dass z. B. ein vergleichsweise großer Austrittsquerschnitt an einem Durchtrittskanal zur Verfügung steht.

Eine weitere Maßnahme zur Vereinfachung des Ventilkörpers besteht darin, dass sich das zweite Ventilelement an der Ringstegscheibe zentriert und nicht z. B. an einer Ringschulter des Ventilkörpers. Man kann einen standardisierten Ventilkörper mit verschiedenen Ringstegscheiben kombinieren, um verschiedene Dämpfkraftkennlinien realisieren zu können.

Anhand der folgenden Figurenbeschreibung soll die Erfindung näher erläutert werden.

Es zeigt:
- Fig. 1: Dämpfkraftkennlinie für eine Dämpfventileinrichtung gemäß der Fig. 2 bis 7
- Fig. 2 - 9: Dämpfventileinrichtung mit zwei Dämpfventilen in Reihenschaltung
- Fig. 10: Dämpfventileinrichtung mit zwei Dämpfventilen in Parallelschaltung

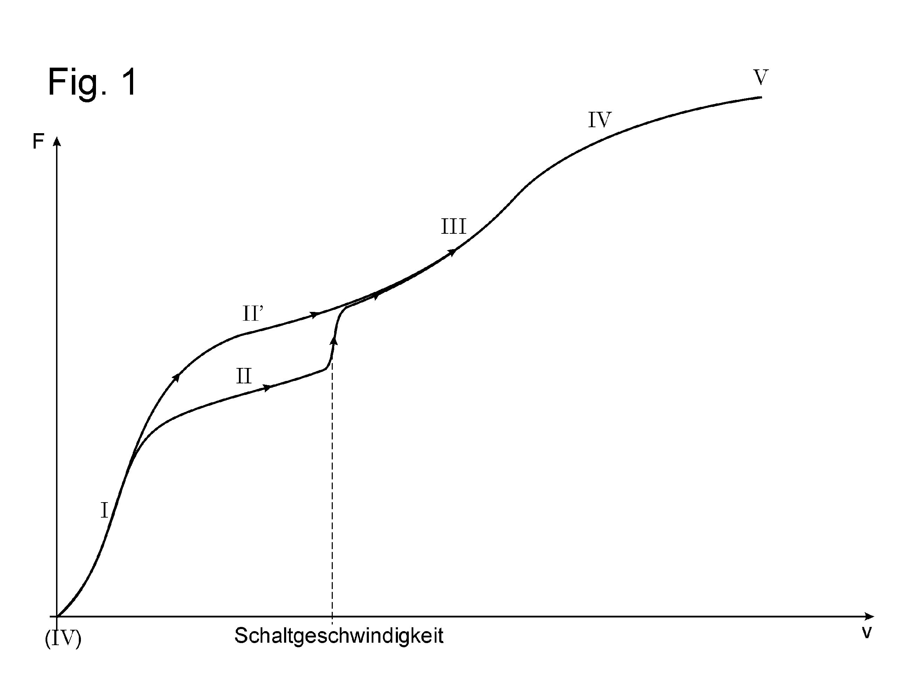

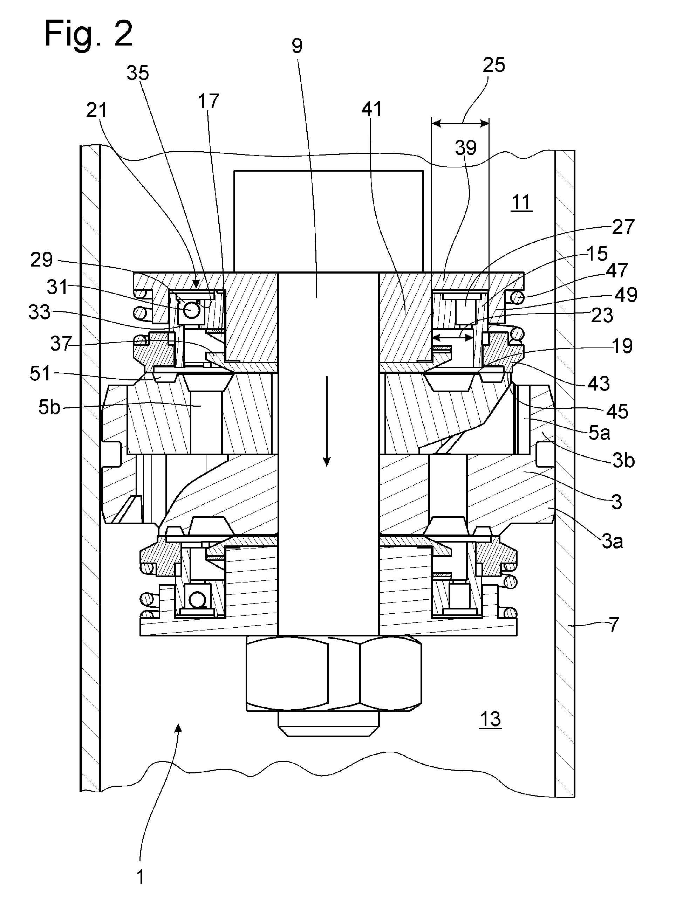

Die Fig. 1 zeigt eine Dämpfkraft/Geschwindigkeitskennlinie für einen Schwingungsdämpfer mit einer Dämpfventileinrichtung nach den Figuren 2 bis 8. Der prinzipielle Aufbau eines Schwingungsdämpfers in einem Kfz darf als bekannt angesehen werden. Beispielhaft wird von einer Dämpfventileinrichtung an einer axial beweglichen Kolbenstange des Schwingungsdämpfers ausgegangen.

Die Dämpfventileinrichtung 1 umfasst einen Ventilkörper 3, der von zwei geschichteten Ventilkörperscheiben 3a; 3b gebildet wird. In beiden Ventilkörperscheiben ist eine Anzahl von Durchtrittskanälen 5a; 5b ausgeführt, die Dämpfmedium innerhalb eines Zylinders 7 des Schwingungsdämpfers diagonal durch den Ventilkörper leiten. Der Ventilkörper 3 an einer Kolbenstange 9 unterteilt den Zylinder 7 in einen kolbenstangenseitigen und einen kolbenstangenfernen Arbeitsraum 11, 13.

Austrittsöffnungen der Durchtrittskanäle 5a; 5b führen Dämpfmedium in Richtung eines ersten Ventilelements 15, das von einer Ventilfeder 17 in einer definierten Betriebsstellung gehalten wird. In Fig. 2 ist erkennbar, dass das erste Ventilelement in der definierten Betriebsstellung von einer inneren Ventilsitzfläche 19 abgehoben ist und damit ein Abfluss mit relativ geringer Drosselwirkung aus dem Durchtrittskanal 5a; 5b möglich ist.

Das erste Ventilelement 15 ist in einem Steuerdruckraum 21 axial beweglich angeordnet und verfügt über zwei druckbeaufschlagte Flächen 23; 25. Eine erste druckbeaufschlagte Fläche übt bei einer Anströmung aus Richtung der Durchtrittskanäle 5a; 5b eine zusätzliche Öffnungskraft auf das erste Ventilelement 15 aus. Zur Erzeugung einer Schließkraft dient die zweite druckbeaufschlagte Fläche 25, die vom Druck im Steuerdruckraum 21 belastet wird. Die zweite druckbeaufschlagte Fläche 25 ist größer als die erste druckbeaufschlagte Fläche 23 am ersten Ventilelement 15.

Zwischen den beiden druckbeaufschlagten Flächen liegt eine Strömungsverbindung vor, die von mehreren Strompfaden 27; 29 gebildet werden. Die Strömungsverbindung selbst ist innerhalb des ersten Ventilelements 15 ausgeführt. Der Strömungspfad 27 ist sowohl in beiden Richtungen durchströmbar, wobei dieser Strömungspfad vordringlich einen Dämpfmediumabfluss aus dem Steuerraum in Richtung der Durchtrittskanäle übernehmen soll. In dem Strömungspfad 29 ist eine Rückschlagventileinrichtung 31 ausgeführt, die bei einer Anströmung ausgehend vom Steuerdruckraum 21 eine Schließstellung einnimmt. Es können sinnvollerweise mehrere Strömungspfade 29 mit einer Rückschlagventileinrichtung bestückt sein. Als Rückschlagventil dient z. B. eine einfache Kugel 31, die zwischen einer Ventilschließfläche 33 und einer Anschlagfläche 35 schwimmend gelagert ist.

Um eine möglichst ungedrosselte Anströmung des ersten Ventilelements zu erreichen und einen einfachen Ventilkörper verwenden zu können, stützt sich die Ventilfeder für das erste Ventilelement auf einer Trägerscheibe 37 ab. Die Trägerscheibe ragt radial in den Bereich der Austrittsöffnung der Durchtrittkanäle 5a; 5b ein, doch sorgt eine in Richtung der Durchtrittskanäle weisende Formschräge für einen vergleichsweise großen axialen Abstand zwischen der Trägerscheibe und der Austrittsöffnung.

Das erste Ventilelement 15 gleitet axial in einer Ringstegscheibe 39, die den Steuerdruckraum 21 bildet. Ein innerer Ringsteg 41 zentriert die Ringstegscheibe 39 der Kolbenstange 9 und spannt die Trägerscheibe 37 auf den Ventilkörper 3.

In Strömungsrichtung in Reihe zum ersten Ventilelement 15 ist ein zweites Ventilelement 43 angeordnet, das ein zweites Dämpfventil bildet. Ausgehend vom Stillstand der Kolbenstange 9 liegt das zweite Ventilelement auf einer zweiten Ventilsitzfläche 45 des Ventilkörpers 3 an und wird von einer Ventilschließfeder 47 vorgespannt. Die Ventilschließfeder 47 stützt sich an einem umlaufenden Rand außerhalb eines äußeren Ringstegs 49 der Ringstegscheibe 39 ab. Der äußere Ringsteg 49 stellt für das zweite Ventilelement eine Abhubbegrenzung dar. Über einen Ringkanal 51 wird das zweite Ventilelement 43 mit Druckmedium beaufschlagt, wobei der Ringkanal von der ersten bzw. inneren Ventilsitzfläche 19 und der äußeren Ventilsitzfläche 45 radial begrenzt wird. Sowohl das erste, wie auch das zweite Ventilelement sind als Ventilringe ausgeführt, wobei sich das zweite Ventilelement einem außerhalb des Steuerraums verlaufenden Steg des ersten Ventilelements zentriert.

Bei einer Kolbenstangenbewegung in Pfeilrichtung wird Dämpfmedium aus dem kolbenstangenfernen Arbeitsraum durch die Durchtrittskanäle 5b in Richtung des ersten Ventilelements 15 verdrängt, das von der Ventilfeder 17 in einer Öffnungsposition gehalten wird. Die Kugeln 31 der Rückschlagventilanordnungen liegen dabei erst bei einer Relativbewegung des ersten Ventilelements 15 zur Ringscheibe 39 an einer der Anschlagflächen 33; 35 an. Bei einer Schließbewegung des Ventilelements 15 befindet sich die Kugel an der Anschlagfläche 35, so dass sämtliche Strömungspfade 27; 29 in Richtung des Steuerraums 21 geöffnet sind. Der Steuerraum wird unter Druck gesetzt, wobei der auf die druckbeaufschlagte Fläche 25 wirksame Druck eine Schließkraft bewirkt, die der Federkraft der Ventilfeder 17 und der Öffnungskraft, hervorgerufen durch den Druck auf die erste druckbeaufschlagte Fläche 23 entgegenwirkt.

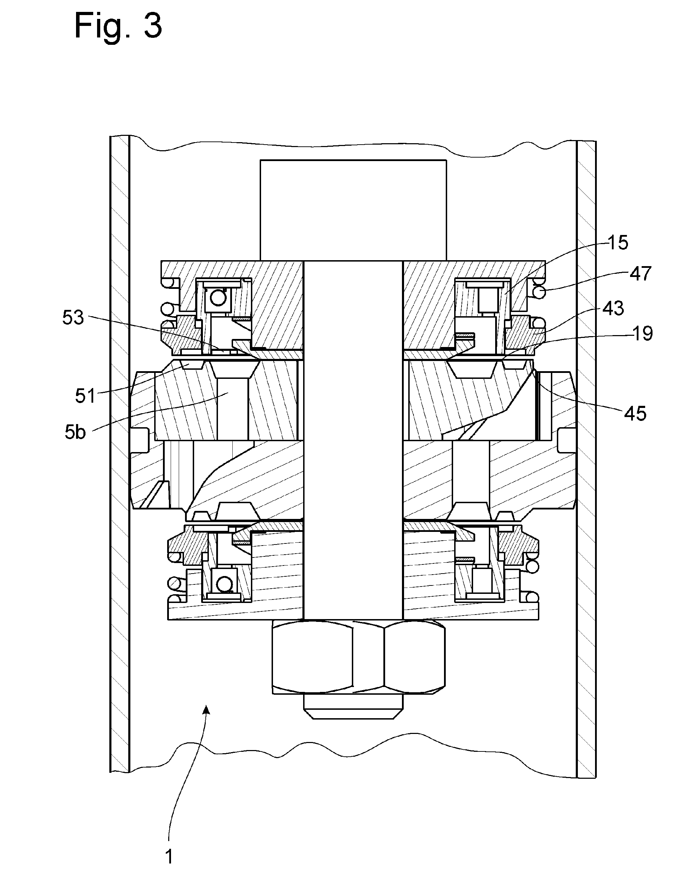

Das zweite Ventilelement 43 liegt in der Ausgangsstellung auf der zweiten Ventilsitzfläche 45 auf. Zwischen zweiten Ventilelement 43 und der Ventilsitzfläche ist dann ein so genannter Voröffnungsquerschnitt wirksam, der die Dämpfkraft im Kennlinienbereich I bestimmt. Mit steigender Kolbenstangengeschwindigkeit wird der Kraftüberschuss in Schließrichtung des ersten Ventilelements größer, da die größere druckbeaufschlagte Fläche 25 den Kraftanteil der Ventilfeder zunehmend kompensiert. Wie aus der Fig. 3 ersichtlich ist, hebt das zweite Ventilelement 43 aufgrund des Druckniveaus im Ringkanal 51 gegen die Schließkraft der Ventilschließfeder 47 von der zweiten Ventilsitzfläche 45 ab. Dann befindet sich die Dämpfventileinrichtung in einem durch den Kennlinienbereich II gekennzeichneten Betriebszustand. Wird die Schaltgeschwindigkeit nicht erreicht und ist auch in einem zurückliegenden Zeitintervall nicht überschritten worden, wird einer Geschwindigkeitsabnahme ein Kraftverlauf nahezu deckungsgleich zur Kennlinie II erreicht.

Wird allerdings eine definierte Schallgeschwindigkeit überschritten, ist der Druckkraftüberschuss auf die zweite druckbeaufschlagte Fläche 25 des ersten Ventilelements so groß, dass das erste Ventilelement 15 auf der inneren Ventilfläche 19 aufsitzt. Dann ist über Aussparungen innerhalb der Ventilsitzfläche 19 oder im Ventilelement 15 ein Restquerschnitt 53 geöffnet. Dieser Restquerschnitt erzeugt ein Druckgefälle zwischen der Austrittsöffnung der Durchtrittskanäle 5b und dem Ringkanal 51, so dass zur weiteren Öffnungsbewegung des zweiten Ventilelements 43 eine größere Kolbenstangengeschwindigkeit v bzw. Druck im Arbeitsraum 13 notwendig ist.

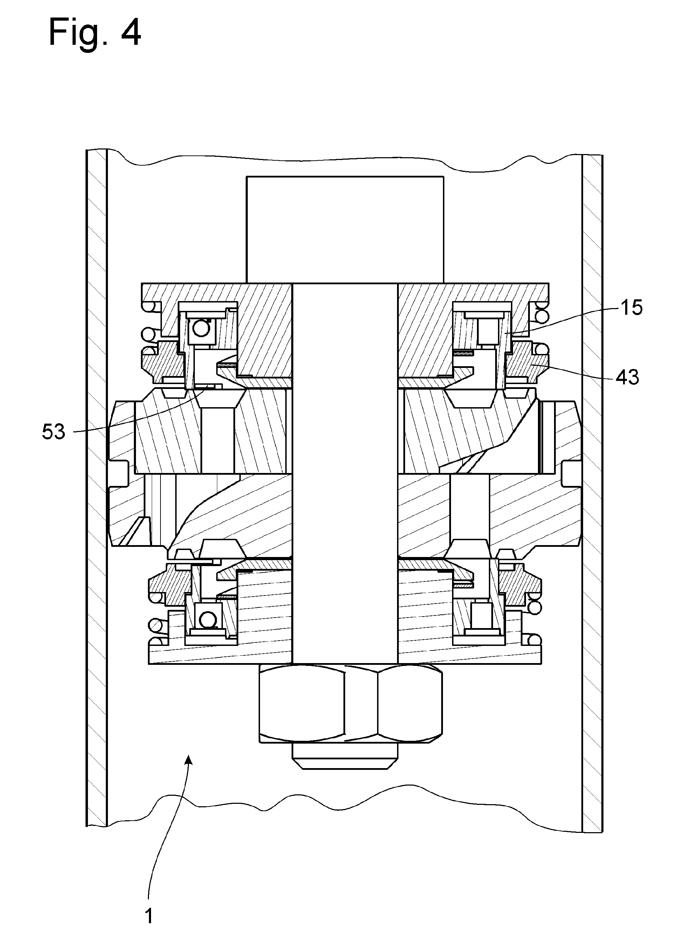

Zwischen dem zweiten Ventilelement 43 und dem ersten Ventilelement 15 besteht noch kein axialer Kontakt, wie in der Fig. 4 erkennbar ist. Der Kennlinienbereich III beschreibt die Dämpfkraftcharakteristik der Dämpfventileinrichtung. Der Bereich v= 0 und v = Schaltgeschwindigkeit entspricht einem Komfortkennlinienbereich, der bei normalen Straßenverhältnissen genutzt wird. Größere Unebenheiten führen zur Überschreitung der Schaltgeschwindigkeit und damit in den Kennlinienbereich III.

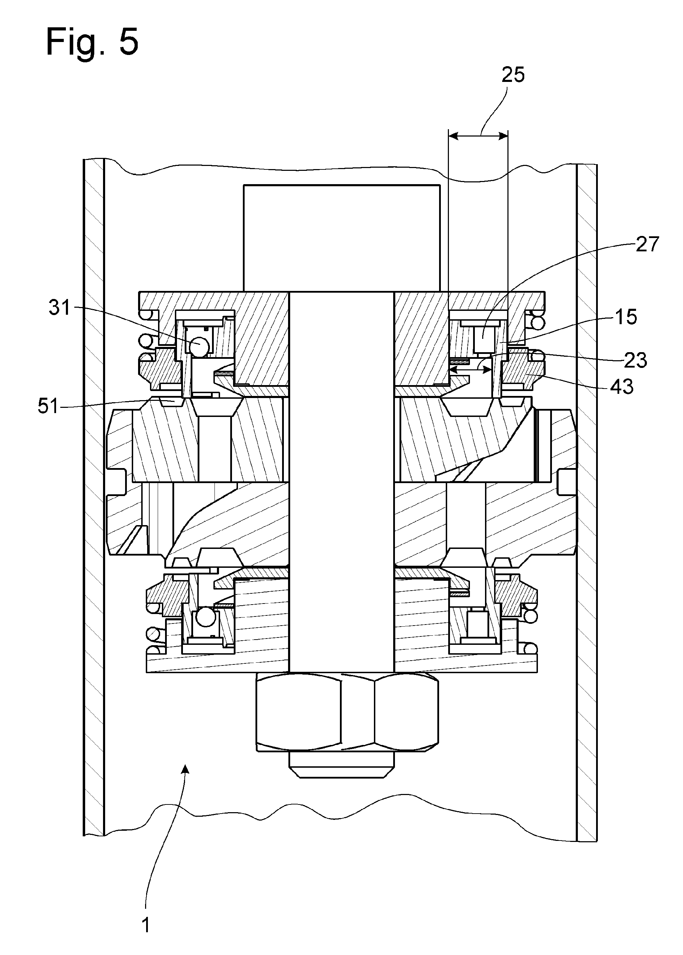

Mit der Fig. 5 ist das Betriebsverhalten der Dämpfventileinrichtung 1 im Kennlinienbereich IV dargestellt. In Weiterführung gemäß dem Zustand nach Fig. 4 liegt nun das zweite Ventilelement mit einem radial nach innen gerichteten Absatz formschlüssig an einer außenseitigen Stufe des ersten Ventilelements an. Ab dem nun vorliegenden Zustand der Dämpfventileinrichtung ändern sich deutlich die auf das erste Ventilelement 15 wirkenden Kräfteverhältnisse. Nun addieren sich die über den Ringkanal 51 druckbeaufschlagte Fläche des zweiten Ventilelements 43 mit der ersten druckbeaufschlagten Fläche 23 des ersten Ventilelements, wobei die Summe dieser beiden Flächen größer ist als die zweite druckbeaufschlagte Fläche 25 des ersten Ventilelements 15. Bei weiterer Druckbeaufschlagung werden beide Ventilelemente 15; 43 in Öffnungsrichtung bewegt. Dabei gehen die Rückschlagventileinrichtungen mit der Kugel 31 in die Schließposition. Über den offenen Strompfad 27 wird eine gedrosselte Mitnahmebewegung erreicht.

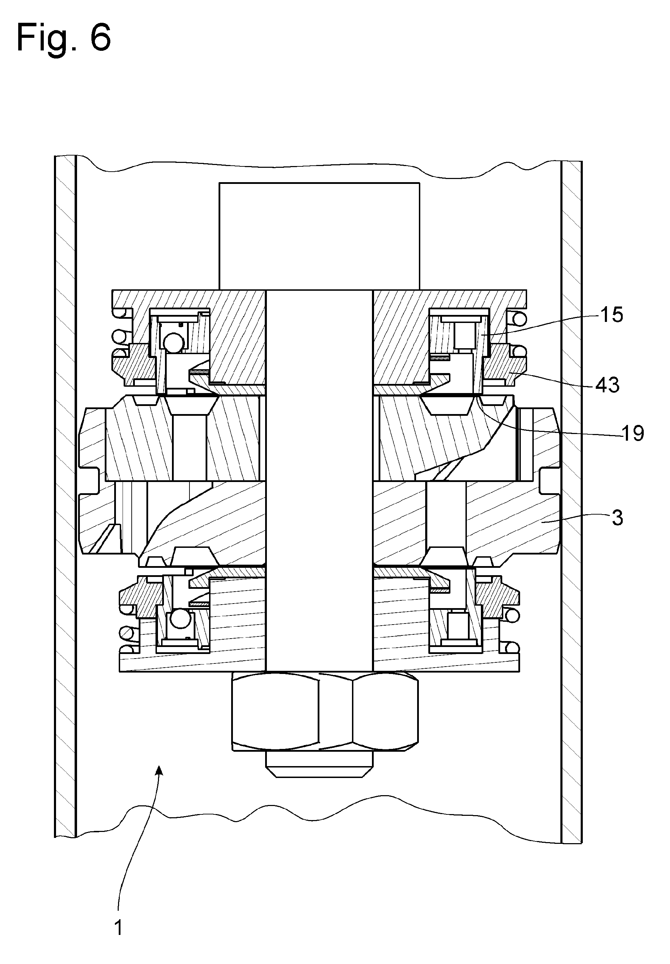

Die Fig. 6 zeigt die maximale Durchlassstellung des zweiten Ventilelements 43, wobei das erste Ventilelement 15 von der ersten Ventilsitzfläche 19 des Ventilkörpers 3 abgehoben ist. Ab diesem Betriebszustand stellt sich ein flacherer Kennlinienverlauf gemäß dem Bereich V in der Fig. 1 ein.

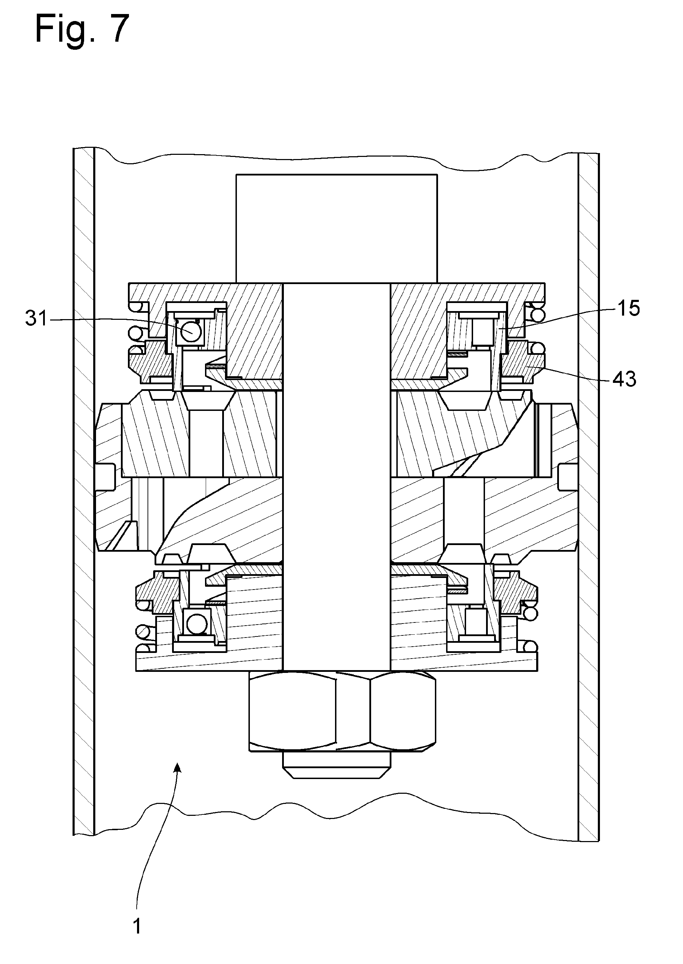

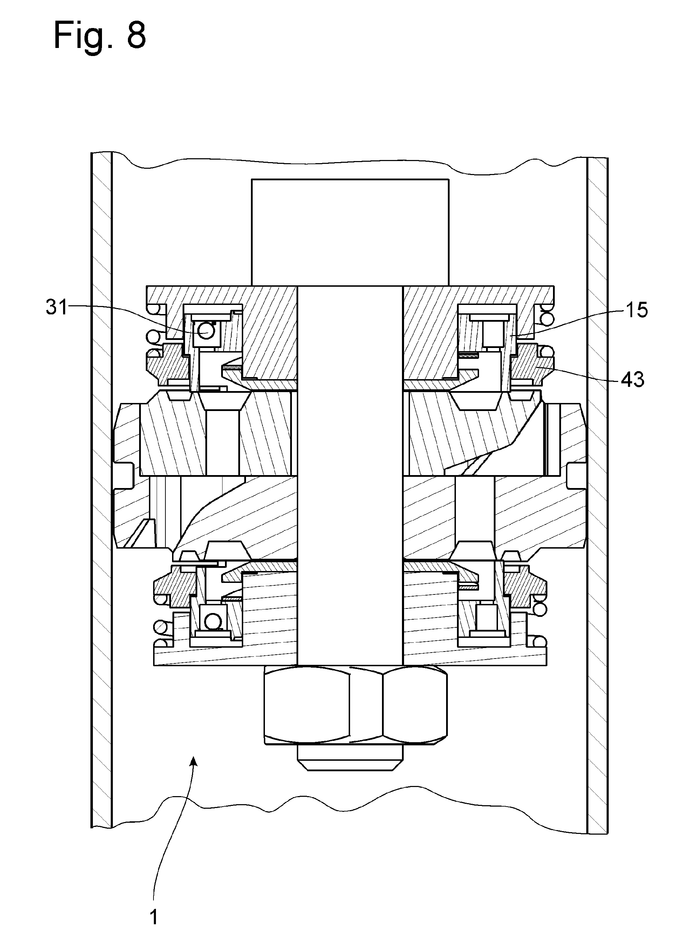

Verringert sich die Kolbenstangengeschwindigkeit, dann nimmt die Öffnungskraft auf die beiden Ventilelemente 43; 15 ab, die eine Schließbewegung gemäß der Figuren 7 und 8 ausführen. Die Rückschlagventileinrichtungen sind dabei geöffnet, so dass die Schließbewegung des ersten Ventilelements 15 ungedrosselt erfolgt.

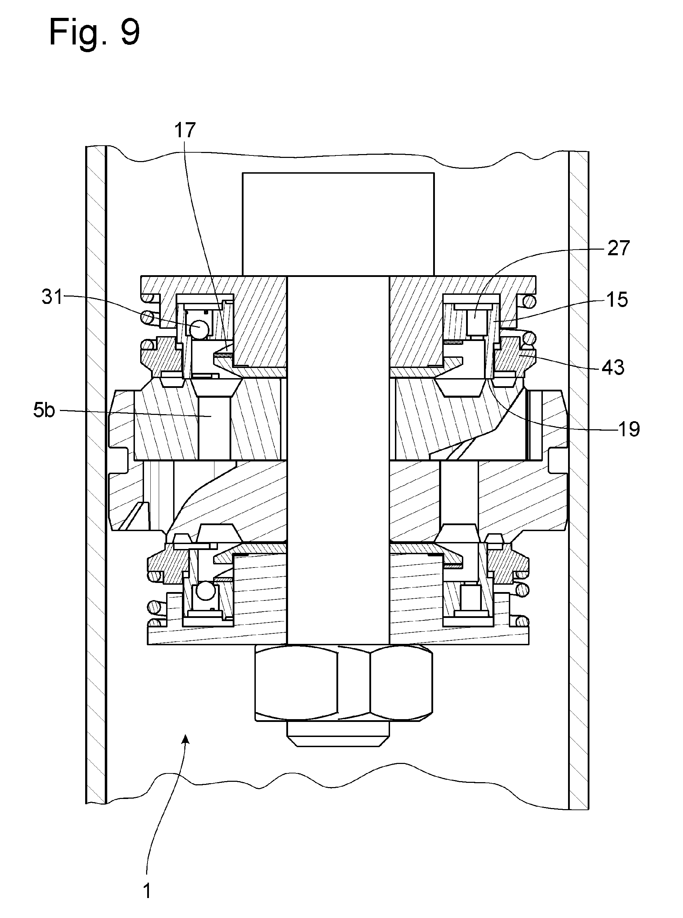

Im Gegensatz zur Fig. 2 befindet sich die Dämpfventileinrichtung bei erneuter Anströmung innerhalb eines bestimmten Zeitintervalls, der bestimmt wird von der Kraft der Rückstellfeder und der Dämpfung durch die Strompfade 27; 29, in einem Betriebszustand gemäß der Fig. 9, in der das erste Ventilelement 15 und das zweite Ventilelement 43 eine Schließposition vergleichbar mit der Fig. 4 einnimmt. Das Rückschlagventil 31 ist nun geschlossen, so dass die weitere Öffnungsbewegung unterstützt von der Ventilfeder 17 über den geöffneten Strompfad 27 gedrosselt erfolgt. Damit steht für das aus dem Durchtrittsquerschnitt 5b abfließende Dämpfmedium bezogen auf die Kolbenstangengeschwindigkeit ein kleinerer Drosselquerschnitt zwischen der Ventilsitzfläche 19 und dem ersten Ventilelement 15 zur Verfügung als bei der erstmaligen Federungsbewegung ausgehend von einem Stillstand der Kolbenstange. Folglich wird bezogen auf eine vergleichbare Kolbenstangengeschwindigkeit eine größere Dämpfkraft erreicht, die durch den Kennlinienbereich II' dargestellt werden soll. Diese größere Dämpfkraft fördert das Abklingen der Schwingbewegung eines Fahrzeugrades.

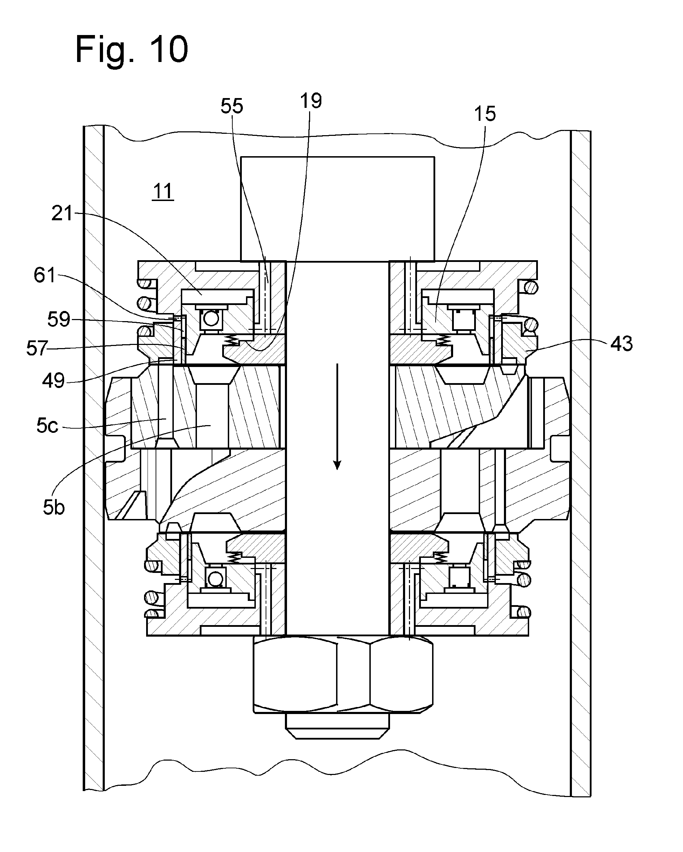

Die Figur 10 zeigt eine Alternativvariante, bei der das erste Ventilelement 15 über einen ersten Durchtrittskanal 5b und das zweite Ventilelement 43 über einen zweiten Durchtrittskanal 5c angeströmt wird, wobei der erste und der zweite Durchtrittskanal 5b; 5c parallel geschaltet sind. Dabei werden die beiden Durchtrittskanäle 5b; 5c im Bereich der Austrittsöffnungen von dem äußeren Ringsteg 49 der Ringstegscheibe 39 getrennt, an dem sich auch das zweite Ventilelement 43 zentriert

In der Ringstegscheibe ist ausgehend von der Ventilsitzfläche 19 ein Abflusskanal 55, der eine Abströmverbindung zwischen dem ersten Durchtrittskanal 5b und dem kolbenstangenseitigen Arbeitsraum 11 bildet. Der Staudruckraum 21 bleibt jedoch in allen Betriebsstellungen des ersten Ventilelements vom Abflusskanal 55 getrennt.

Um einen Größenunterschied zwischen den beiden druckbeaufschlagten Flächen 23; 25 am ersten Ventilelement zu realisieren, ist an der Innenwand des äußeren Ringstegs 49 eine Buchse 57 eingebracht, die nach dem Einsetzen des ersten Ventilelements 15 in den Steuerraum 21 montiert wird. Zur Entlüftung und zum Volumenausgleich eines Ringraums 59 zwischen der Buchse 57 und dem ersten Ventilelement 15 dient eine Radialöffnung 61.

Das Betriebsverhalten dieser Dämpfeinrichtung entspricht im Wesentlichen dem der vorbeschriebenen Bauform nach den Fig. 2 bis 9. Abweichend bewegen sich beide Ventilelement 15; 43 stets unabhängig, d. h. es gibt keine Mitnahmephase durch das Ventilelement 43.

Die Beschreibung beschränkt sich zwar auf die Wirkungsweise der Dämpfventileinrichtung in Pfeilrichtung, doch stellt sich ein identisches Betriebsverhalten auch bei einer Kolbenstangenbewegung in Richtung des kolbenstangenfernen Arbeitsraums ein, da die Dämpfventileinrichtung hinsichtlich der Ventilelemente um eine Teilungsfuge im Ventilkörper spiegelbildlich ausgeführt ist.

### Bezugszeichenliste

- 1: Dämpfventileinrichtung
- 3: Ventilkörper
- 5a; 5b 5c: Durchtrittskanäle
- 7: Zylinder
- 9: Kolbenstange
- 11: kolbenstangenseitiger Arbeitsraum
- 13: kolbenstangenferner Arbeitsraum
- 15: erstes Ventilelement
- 17: Ventilfeder
- 19: Ventilsitzfläche
- 21: Steuerraum
- 23: erste druckbeaufschlagte Fläche
- 25: zweite druckbeaufschlagte Fläche
- 27; 29: Strompfad
- 31: Rückschlagventileinrichtung
- 33: Ventilschließfläche
- 35: Anschlagfläche
- 37: Trägerscheibe
- 39: Ringstegscheibe
- 41: innerer Ringsteg
- 43: zweites Ventilelement
- 45: Ventilsitzfläche
- 47: Ventilschließfeder
- 49: äußerer Ringsteg
- 51: Ringkanal
- 53: Restquerschnitt
- 55: Abflusskanal
- 57: Buchse
- 59: Ringraum
- 61: Radialöffnung

## Patentansprüche

1. Dämpfventileinrichtung (1), umfassend einen Ventilkörper (3) mit mindestens einem Durchtrittskanal (5a; 5b; 5c), der mit einem Ventilelement (15) ein Dämpfventil bildet, wobei das Ventilelement (15) von einer Ventilfeder (17) in einem Steuerdruckraum (21) in einer definierten Betriebsstellung gehalten wird und bei einer Anströmung vom Durchtrittskanal (5a; 5b) in eine Öffnungsbewegung überführt wird, wobei das Ventilelement (15) eine erste druckbeaufschlagte Fläche (23), die bei Druckbeaufschlagung ausgehend von dem mindestens einen Durchtrittskanal (5a; 5b) eine Öffnungskraft und eine zweite druckbeaufschlagte Fläche (25) am Ventilelement (15) aufweist, die bei Druckbeaufschlagung im Steuerdruckraum (21) eine Schließkraft auf das Ventilelement (15) ausübt, wobei das Ventilelement (15) oberhalb eines definierten Druckniveaus in eine Schließposition bewegt wird, wobei zwischen dem Durchtrittskanal (5a; 5b) und dem Steuerdruckraum (21) mindestens eine Strömungsverbindung (27; 29) vorliegt,
**dadurch gekennzeichnet,**
**dass** die zweite druckbeaufschlagte Fläche (25) am Ventilelement (15) größer ist als die erste druckbeaufschlagte Fläche (23) und die Strömungsverbindung mindestens zwei Strompfade (27; 29) aufweist, wobei mindestens ein Strompfad einen Volumenstrom (27) in Abflussrichtung aus dem Steuerdruckraum (21) ermöglicht und ein Strompfad (29) mit einer Rückschlagventileinrichtung (31) ausgeführt ist, die bei einer Anströmung ausgehend vom Steuerdruckraum (21) eine Schließstellung einnimmt.

2. Dämpfventileinrichtung nach Anspruch 1,
**dadurch gekennzeichnet,**
**dass** die Strömungsverbindung (27; 29) innerhalb des Ventilelements (15) ausgeführt ist.

3. Dämpfventilring nach Anspruch 1,
**dadurch gekennzeichnet,**
**dass** der Steuerdruckraum (21) von einer Ringstegscheibe (39) gebildet wird.

4. Dämpfventil nach Anspruch 1,
**dadurch gekennzeichnet,**
**dass** in Strömungsrichtung in Reihe zum Ventilelement (15) ein zweites Ventilelement (43) angeordnet ist, das ein zweites Dämpfventil bildet.

5. Dämpfventileinrichtung nach Anspruch 1,
**dadurch gekennzeichnet,**
**dass** das erste Ventilelement über einen ersten Durchtrittskanal (5b; 5c) und das zweite Ventilelement (43) über den zweiten Durchtrittskanal (5c) mit Dämpfmedium angeströmt wird, wobei der erste und der zweite Durchtrittskanal parallel (5b; 5c) geschaltet sind.

6. Dämpfventil nach Anspruch 4,
**dadurch gekennzeichnet,**
**dass** der Ventilkörper (3) für das erste Ventilelement (15) eine erste Ventilsitzfläche (19) aufweist, die einen Ringkanal (51) zum zweiten Ventilelement (43) begrenzt.

7. Dämpfventil nach Anspruch 4,
**dadurch gekennzeichnet,**
**dass** das zweite Ventilelement (43) radial außerhalb der ersten druckbeaufschlagten Fläche (23) des ersten Ventilelements (15) angeordnet ist und ab einem definierten Abhubweg am ersten Ventilelement (15) zur Anlage kommt und dabei die wirksame druckbeaufschlagte Fläche von der Summe der ersten druckbeaufschlagten Fläche (23) am ersten Ventilelement (15) und von einer druckbeaufschlagten des zweiten Ventilelements (43) bestimmt wird, wobei die Summe der beiden druckbeaufschlagten Fläche mindestens so groß ist wie die zweite druckbeaufschlagte Fläche (25) des ersten Ventilelements (15).

8. Dämpfventil nach den Ansprüchen 4 oder 5,
**dadurch gekennzeichnet,**
**dass** das zweite Ventilelement (43) als ein Ventilring ausgeführt ist.

9. Dämpfventilring nach Anspruch 8,
**dadurch gekennzeichnet,**
**dass** sich der Ventilring (43) an einem außerhalb des Steuerdruckraums (21) verlaufenden Stegs des ersten Ventilelements (15) zentriert.

10. Dämpfventilring nach Anspruch 4,
**dadurch gekennzeichnet,**
**dass** ein Ringsteg (49) der Ringstegscheibe (39) eine Abhubbegrenzung für das zweite Ventilelement (43) darstellt.

11. Dämpfventileinrichtung nach Anspruch 3,
**dadurch gekennzeichnet,**
**dass** sich eine Ventilschließfeder (47) für das zweite Ventilelement (43) an der Ringstegscheibe (39) abstützt.

12. Dämpfventileinrichtung nach Anspruch 5,
**dadurch gekennzeichnet,**
**dass** die Ringstegsscheibe (39) den ersten und den zweiten Durchtrittskanal (5b; 5c) im Bereich der Austrittsöffnungen voneinander trennt.

13. Dämpfventileinrichtung nach Anspruch 1,
**dadurch gekennzeichnet,**
**dass** sich die Ventilfeder (17) für das erste Ventilelement (15) auf einer Trägerscheibe (37) abstützt, die räumlich zwischen dem Ventilkörper (15) und der Ringstegscheibe (39) angeordnet ist.

14. Dämpfventileinrichtung nach Anspruch 5,
**dadurch gekennzeichnet,**
**dass** sich das zweite Ventilelement (43) an der Ringstegscheibe (39) zentriert.
